# EUROPEAN PATENT SPECIFICATION

(11) **EP 2 905 938 B1**
(45) Date of publication and mention of the grant of the patent: **17.10.2018**
(21) Application number: 14784795.8
(22) Date of filing: 16.04.2014
(51) Int. Cl.: H04W 4/02, G01S 5/00, H04L 29/06

(54) **METHOD FOR ACQUIRING LOCATING INFORMATION, TERMINAL AND MOBILE BROADBAND INTERFACE MODEL (MBIM) DEVICE**
VERFAHREN ZUR ERFASSUNG VON STANDORTINFORMATIONEN, ENDGERÄT UND MBIM-VORRICHTUNG
PROCÉDÉ D'ACQUISITION D'INFORMATIONS DE LOCALISATION, TERMINAL, ET DISPOSITIF DE MODÈLE D'INTERFACE À LARGE BANDE MOBILE (MBIM)

(30) Priority: 19.04.2013 CN 201310137245
(43) Date of publication of application: 12.08.2015
(73) Proprietor: Huawei Device Co., Ltd., Longgang District Shenzhen Guangdong 518129 (CN)
(72) Inventor: AN, Kang, Shenzhen Guangdong 518129 (CN)
(74) Representative: Maiwald Patent- und Rechtsanwaltsgesellschaft mbH
(86) International application number: PCT/CN2014/075511
(87) International publication number: WO 2014/169823

(56) References cited:
- CN-A- 102 769 612
- CN-A- 102 869 125
- "Universal Serial Bus Communications Class Subclass Specification for Mobile Broadband Interface Model", , 14 November 2011 (2011-11-14), XP055223611, Retrieved from the Internet: URL:http://caxapa.ru/thumbs/334029/MBIM_v1 _0_USBIF_FINAL.pdf [retrieved on 2015-10-26]

## Description

### TECHNICAL FIELD

The present invention relates to the field of communications technologies, and in particular, to a method for implementing positioning information acquisition, a terminal, and a Mobile Broadband Interface Model MBIM device.

### BACKGROUND

With an increase of functions of a mobile broadband device, an application and a service based on address location information are already one of main applications of a combination of mobile communications products and the Internet.

A Global Positioning System (GPS) is a module for providing address location function information in real time, and has become a basic module of a mobile communications device.

In the prior art, a host implements a positioning function by using a mobile broadband device; and the mobile broadband device needs to enumerate an extended port as a data communications channel by using a Universal Serial Bus (USB) and communicate with the host by using a USB virtual serial port, so as to transmit positioning information to the host. However, the USB virtual serial port can only be used when a corresponding drive is installed, which causes inconvenience for the host to acquire the positioning information.

CN 102769612 A describes a method, a device, and a wireless communication terminal for achieving the functions of the Global Positioning System on the basis of a Mobile Broadband Interface Model.
A Universal Serial Bus Communications Class Subclass Specification for Mobile Broadband Interface Model, Revision 1.0, November 14, 2011, specifies a protocol by which USB hosts and Mobile Broadband Devices can efficiently exchange control commands and data frames.

### SUMMARY

For the foregoing defect in the prior art, the present invention provides a positioning information acquisition method, a terminal, and a Mobile Broadband Interface Model MBIM device, so as to implement that a terminal directly acquires positioning information from a GPS module by using a Mobile Broadband Interface Model MBIM device according to the independent claims.

Further exemplary embodiments are given by the dependent claims.

For example, a positioning information acquisition method is provided, including:
acquiring, by a terminal, a positioning query request;
sending, by the terminal, the positioning query request to an MBIM device through a Mobile Broadband Interface Model (Mobile Broadband Interface Model, MBIM) data channel, so that the MBIM device acquires positioning information of the terminal according to the positioning query request; and
   receiving, by the terminal through the MBIM data channel, the positioning information returned by the MBIM device, before the sending, by the terminal, the positioning query request to an MBIM device through a Mobile Broadband Interface Model MBIM data channel, the method further includes:
converting, by the terminal, the positioning query request into a positioning query request in a user-defined data stream DSS format for a data channel.

For example, the positioning information that is returned by the MBIM device and received by the terminal through the MBIM data channel is in a DSS format; and
after the receiving, by the terminal through the MBIM data channel, the positioning information returned by the MBIM device, the method further includes:
converting, by the terminal, the positioning information in a DSS format into positioning information in a format that can be identified by the terminal.

For example, before the acquiring by a terminal a positioning query request, the method further includes:
sending, by the terminal through an MBIM control channel, a service query request to the MBIM device; and
receiving, by the terminal through the MBIM control channel, service information that is supported by the MBIM device and returned by the MBIM device, where the service information is used to indicate that the terminal supports a query of the positioning information.

For example, a positioning information acquisition method is provided, including:
receiving, by a Mobile Broadband Interface Model MBIM device through an MBIM data channel, a positioning query request sent by a terminal;
acquiring, by the MBIM device, positioning information of the terminal according to the positioning query request; and
sending, by the MBIM device, the positioning information to the terminal through the MBIM data channel, by the MBIM device, the positioning information to the terminal through the MBIM data channel, the method further includes:
   converting, by the MBIM device, the positioning information into positioning information in a DSS format.

For example, before the receiving, by an MBIM device through an MBIM data channel, a positioning query request sent by a terminal, the method further includes:
receiving, by the MBIM device through an MBIM control channel, a service query request sent by the terminal; and
returning, by the MBIM device through the MBIM control channel, service information that is supported by the MBIM device to the terminal, where the service information is used to indicate that the terminal supports a query of the positioning information.

For example, a terminal is provided, including:
an application module, configured to acquire a positioning query request;
a first sending module, configured to send the positioning query request to an MBIM device through a Mobile Broadband Interface Model MBIM data channel, so that the MBIM device acquires positioning information of the terminal according to the positioning query request; and
a first receiving module, configured to receive, through the MBIM data channel, the positioning information returned by the MBIM device
a first converting module, configured to convert the positioning query request into a positioning query request in a user-defined data stream DSS format for a data channel.

For example, the positioning information that is returned by the MBIM device and received by the terminal through the MBIM data channel is in a DSS format; and
the first converting module is further configured to convert the positioning information in a DSS format into positioning information in a format that can be identified by the terminal.

For example, the terminal further includes:
a service querying module, configured to send a service query request to the MBIM device through an MBIM control channel; and
a service receiving module, configured to receive, through the MBIM control channel, service information that is supported by the MBIM device and returned by the MBIM device, where the service information is used to indicate that the terminal supports a query of the positioning information.

For example, a Mobile Broadband Interface Model MBIM device is provided, including:
a second receiving module, configured to receive, through an MBIM data channel, a positioning query request sent by a terminal;
an acquiring module, configured to acquire positioning information of the terminal according to the positioning query request; and
a second sending module, configured to send the positioning information to the terminal through the MBIM data channel.

For example, the acquiring module is a Global Positioning System GPS module.

For example, in a second possible implementation manner,
the positioning query request that is sent by the terminal and received by the second receiving module through the MBIM data channel is in a user-defined data stream DSS format for a data channel; and
the MBIM device further includes:
a second converting module, configured to convert the positioning query request in a DSS format into a positioning query request in a format that can be identified by the GPS module, and send the converted positioning query request to the GPS module.

For example, the second converting module is further configured to: receive the positioning information acquired by the GPS module, convert the positioning information into positioning information in a DSS format, and send the converted positioning information to the second sending module.

For example, the MBIM device further includes:
a query receiving module, configured to receive, through an MBIM control channel, a service query request sent by the terminal; and
a service reporting module, configured to return, through the MBIM control channel, service information that is supported by the MBIM device to the terminal, where the service information is used to indicate that the MBIM device supports a query of the positioning information.

According to the positioning information acquisition method, the terminal, and the MBIM device that are provided in the present invention, a terminal may directly communicate with an MBIM device through an MBIM data channel, and the MBIM device may directly communicate with a GPS module, so as to implement that the terminal performs positioning by using the MBIM device by acquiring positioning information from the GPS module without installing a drive, which is convenient for the terminal to acquire the positioning information.

### BRIEF DESCRIPTION OF DRAWINGS

FIG. 1 is a flowchart of a positioning information acquisition method according to an embodiment of the present invention;
FIG. 2 is a flowchart of a positioning information acquisition method according to another embodiment of the present invention;
FIG. 3 is a signaling flowchart of a positioning information acquisition method according to still another embodiment of the present invention;
FIG. 4 is a schematic structural diagram of a terminal according to an embodiment of the present invention;
FIG. 5 is a schematic structural diagram of a terminal according to another embodiment of the present invention;
FIG. 6 is a schematic structural diagram of a terminal according to still another embodiment of the present invention;
FIG. 7 is a schematic structural diagram of an MBIM device according to an embodiment of the present invention;
FIG. 8 is a schematic structural diagram of an MBIM device according to another embodiment of the present invention;
FIG. 9 is a schematic structural diagram of an MBIM device according to still another embodiment of the present invention;
FIG. 10 is a schematic structural diagram of an MBIM device according to still another embodiment of the present invention;
FIG. 11 is a schematic structural diagram of a terminal according to still another embodiment of the present invention; and
FIG. 12 is a schematic structural diagram of an MBIM device according to still another embodiment of the present invention.

### DESCRIPTION OF EMBODIMENTS

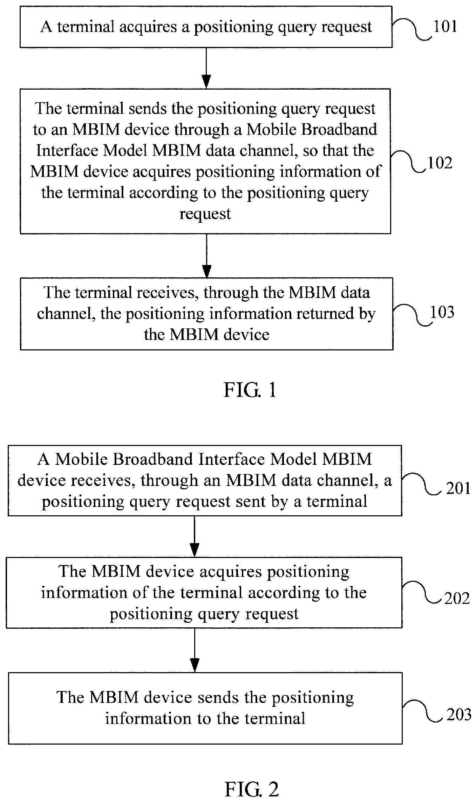

FIG. 1 is a flowchart of a positioning information acquisition method according to an embodiment of the present invention. As shown in FIG. 1, this embodiment of the present invention provides a positioning information acquisition method, and the method includes the following steps:
S101: A terminal acquires a positioning query request.
   The terminal involved in this embodiment of the present invention may be various types of terminals, such as a mobile phone, a PAD (Portable Device, portable device), and a PC (personal computer, personal computer).
S102: The terminal sends the positioning query request to an MBIM device through a Mobile Broadband Interface Model MBIM data channel, so that the MBIM device acquires positioning information of the terminal according to the positioning query request.
   The MBIM device involved in this embodiment of the present invention refers to a device that performs communication by using an MBIM protocol. The MBIM protocol is a device interface specification of a network adapter. An MBIM device using the MBIM protocol may directly communicate, through an MBIM data channel, with a terminal in a data format that is specified in the MBIM protocol; and the MBIM device may directly communicate with a GPS like another wireless network device. The MBIM data channel may be a data channel that is specified in the MBIM protocol, where an IP data packet or a user-defined data packet may be transmitted between a terminal and an MBIM device on the MBIM data channel. The user-defined data packet may generally start with a DSS identifier.
   Optionally, the terminal may convert the positioning query request into a positioning query request in a format that is specified in the MBIM protocol, for example, a user-defined data stream DSS format for a data channel, and then send the converted positioning query request to the MBIM device through the MBIM data channel.
S103: The terminal receives, through the MBIM data channel, the positioning information returned by the MBIM device.

Similar to S102, the positioning information that is returned by the MBIM device and received by the terminal through the MBIM data channel also conforms to the format that is specified in the MBIM protocol, for example, the positioning information may be in a DSS format. Therefore, after receiving the positioning information through the MBIM data channel, the terminal may further convert the positioning information into positioning information in a format that can be identified by the terminal.

According to the positioning information acquisition method provided in this embodiment, a terminal may directly communicate with an MBIM device through an MBIM data channel, and the MBIM device may directly communicate with a GPS module, so as to implement that the terminal performs positioning by using the MBIM device by acquiring positioning information from the GPS module without installing a drive, which is convenient for the terminal to acquire the positioning information.

FIG. 2 is a flowchart of a positioning information acquisition method according to another embodiment of the present invention. As shown in FIG. 2, this embodiment provides a positioning information acquisition method, and the method includes the following steps:
S201: A Mobile Broadband Interface Model MBIM device receives, through an MBIM data channel, a positioning query request sent by a terminal.
S202: The MBIM device acquires positioning information of the terminal according to the positioning query request.
S203: The MBIM device sends the positioning information to the terminal through the MBIM data channel.

Specifically, the technical solution in this embodiment may be applicable to a scenario in which a GPS module is disposed in an MBIM device in an integrated manner or no GPS module is disposed in an MBIM device.

In a scenario in which a GPS module is disposed in an MBIM device in an integrated manner, after the MBIM device receives a positioning query request that is sent by a terminal through an MBIM data channel, the GPS module in the MBIM device may perform corresponding processing according to the positioning query request to acquire positioning information, and feed the positioning information back to the MBIM device.

The GPS module may feed the positioning information back to the MBIM device in real time, or may send a piece of positioning information to the MBIM device at a certain time interval (for example, Is). After acquiring the positioning information, the MBIM device may send the positioning information to the terminal through the MBIM data channel.

When no GPS module is disposed in an MBIM device, after receiving a positioning query request that is sent by a terminal through an MBIM data channel, the MBIM device may send the positioning query request to a GPS module, so that the GPS module performs corresponding processing according to the positioning query request to acquire positioning information, and feeds the positioning information back to the MBIM device, and therefore the MBIM device may also acquire the positioning information of the terminal.

Similar to S102 and S103, the positioning query request that is received by the MBIM device through the MBIM data channel may be in a user-defined data stream DSS format for a data channel. Because the GPS module cannot identify data in a DSS format, correspondingly, the MBIM device may convert the positioning query request in a DSS format into a positioning query request in a format that can be identified by the GPS module, so that the GPS module performs corresponding processing according to the converted positioning query request, so as to acquire the positioning information.

Similarly, the positioning information fed back by the GPS module is not in a DSS format; therefore, after receiving the positioning information, the MBIM device may convert the positioning information into positioning information in a DSS format, so that the MBIM device may send the positioning information in a DSS format to the terminal through the MBIM data channel.

According to the positioning information acquisition method provided in this embodiment, a terminal may directly communicate with an MBIM device through an MBIM data channel, and the MBIM device may directly communicate with a GPS module, so that the terminal implements a positioning function by using the MBIM device by acquiring positioning information from the GPS module without installing a drive, which is convenient for the terminal to acquire the positioning information.

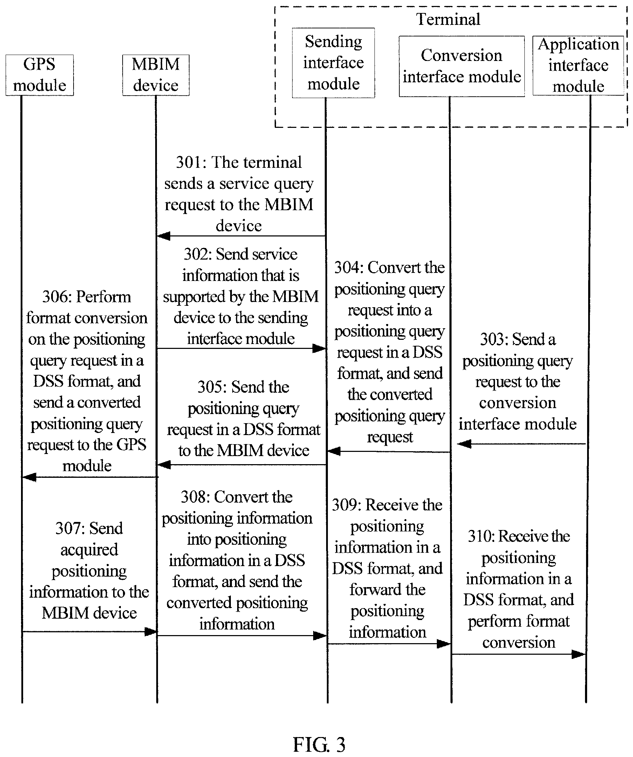

FIG. 3 is a signaling flowchart of a positioning information acquisition method according to still another embodiment of the present invention. In this embodiment, the positioning information acquisition method in the present invention is described in detail by using a terminal in which a Windows 8 operating system is installed as an example. Specifically, the terminal may include an application interface module, a conversion interface module, and a sending interface module, where the application interface module is configured to interact with a user, a function of the application interface module may be implemented by using a GPS API (Application Programming Interface, application programming interface); the conversion interface module is configured to perform format conversion on data, and a function of the conversion interface module may be implemented by using a mobile broadband network interface function (Interface Mobile Broadband Network, IMbn) API; and the sending interface module is an interface module configured to communicate with an MBIM device. In addition, both the MBIM device and a GPS module may be devices independent of the terminal, but in some implementation scenarios, a GPS module may be disposed on an MBIM device.

As shown in FIG. 3, S301 and S302 are a process in which a terminal acquires service information of an MBIM device, and S303 to S310 are a process in which the terminal acquires positioning information from a GPS module by using the MBIM device, which may specifically include the following steps:
S301: A sending interface module sends a service query request to an MBIM device (MBIM device) through an MBIM control channel.
   The service query request may be a standard command identifier (Command Identifier, CID) command "MBB_CID_DEVICE_SERVICES".
S302: After receiving the service query request, the MBIM device sends service information that is supported by the MBIM device to the sending interface module, where the service information is used to indicate that the terminal supports a query of positioning information.

It should be noted that the service information may be a universally unique identifier (universally unique identifier, UUID) of all device services that are supported by the MBIM device, where the device services refer to a set of a group of similar functions, and one specific UUID unique identifier may be used for each device service.

It should be noted that the device services may be mainly classified into two types, where one type are standard device services that are specified in an MBIM protocol, for example, a cellular network and a short message service; and the other type are extended device services that may be defined by an equipment vendor. All device service information may be stored into firmware of an MBIM device by the equipment vendor in a manufacturing process.

In this embodiment, the extended device service can support communication between a terminal and a GPS, and the extended device service may correspond to the first predefined UUID. After receiving the service query request of the terminal, the MBIM device may report, to the terminal, both the UIDD, which is used to implement a GPS function, of a device service and a UIDD of another device service as service information, so as to enable the terminal to learn that the MBIM device can support implementation of a GPS communications function of the terminal.
S303: An application interface module sends a positioning query request to a conversion interface module.
   The application interface module is a module for interaction between a user and a terminal, and the user may trigger by means of a mutual interaction between the user and the application interface module, to start a GPS service function of the terminal, set a GPS function, query a current location of the terminal, and the like. After acquiring a positioning query request of the user, the application interface module may send the positioning query request to the conversion interface module.
S304: After receiving the foregoing positioning query request, the conversion interface module converts the positioning query request into a positioning query request in a user-defined data stream DSS format for a data channel, and sends the converted positioning query request to the sending interface module.
   A positioning query request in a DSS format specifically refers to a data packet that starts with a DSS identifier and may be transmitted through an MBIM data channel between a terminal and an MBIM device.
S305: The sending interface module sends the positioning query request in a DSS format to the MBIM device through an MBIM data channel.
S306: After receiving the positioning query request in a DSS format, the MBIM device performs data conversion on the positioning query request in a DSS format for a GPS to perform identification, and sends a converted positioning query request to a GPS module.
S307: After receiving the positioning query request, the GPS module performs corresponding processing to acquire positioning information corresponding to the positioning query request, and returns the positioning information to the MBIM device.
   It should be noted that after receiving the positioning query request, the GPS module may return, at a certain time interval, the acquired positioning information to the MBIM device in real time.
S308: After receiving the positioning information, the MBIM device converts the positioning information into positioning information in a DSS format, and sends the converted positioning information to the sending interface module through the MBIM data channel.
S309: After receiving the positioning information in a DSS format, the sending interface module forwards the positioning information in a DSS format to the conversion interface module.
S310: After receiving the positioning information, the conversion interface module reconverts the positioning information in a DSS format into positioning information in a format that can be identified by the terminal, and sends the reconverted positioning information to the application interface module, so that a user reads the positioning information by using the application interface module.

According to the positioning information acquisition method provided in this embodiment, a terminal may directly communicate with an MBIM device through an MBIM data channel, and the MBIM device may directly communicate with a GPS module, so that the terminal implements a positioning function by using the MBIM device by acquiring positioning information from the GPS module without installing a drive, which is convenient for the terminal to acquire the positioning information.

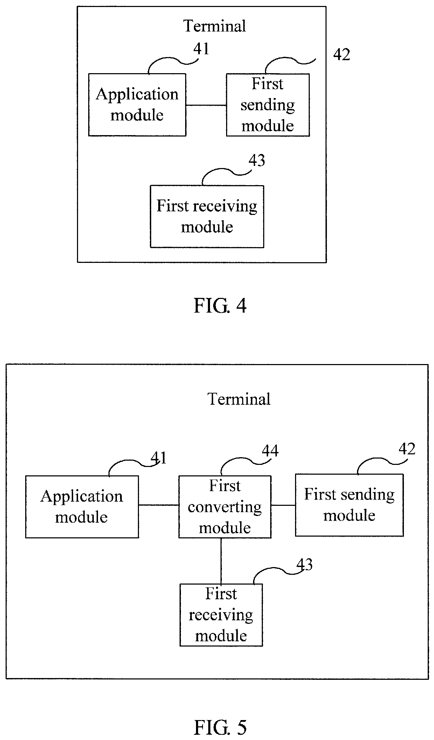

FIG. 4 is a schematic structural diagram of a terminal according to an embodiment of the present invention. As shown in FIG. 4, the terminal provided in this embodiment includes:
an application module 41, configured to acquire a positioning query request;
a first sending module 42, configured to send the positioning query request to an MBIM device through a Mobile Broadband Interface Model MBIM data channel, so that the MBIM device acquires positioning information of the terminal according to the positioning query request; and
a first receiving module 43, configured to receive, through the MBIM data channel, the positioning information returned by the MBIM device.

The terminal provided in this embodiment is configured to execute the method embodiment shown in FIG. 1. The terminal provided in this embodiment may implement direct communication between the terminal and an MBIM device through an MBIM data channel. When a host implements a positioning function by using the MBIM device, no drive needs to be installed, which is convenient for the terminal to acquire the positioning information.

FIG. 5 is a schematic structural diagram of a terminal according to another embodiment of the present invention. As shown in FIG. 5, on a basis of a structure shown in FIG. 4, the terminal provided in this embodiment may further include:
a first converting module 44, configured to convert the positioning query request into a positioning query request in a user-defined data stream DSS format for a data channel, so that the terminal may send the positioning query request in a DSS format through the MBIM data channel.

Further, the first converting module 44 may be further configured to convert the positioning information in a DSS format into positioning information in a format that can be identified by the terminal. When the positioning information that is returned by the MBIM device and received by the terminal through the MBIM data channel is in a DSS format, the first converting module 44 needs to convert the positioning information in a DSS format, so that the terminal performs identification.

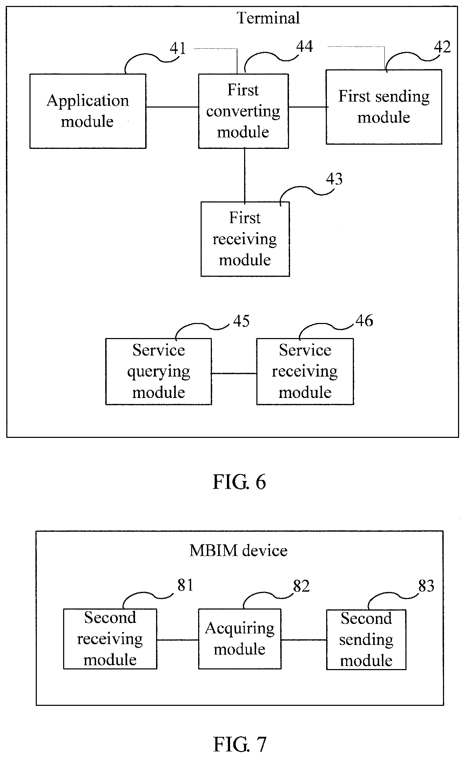

FIG. 6 is a schematic structural diagram of a terminal according to still another embodiment of the present invention. As shown in FIG. 6, on a basis of a structure shown in FIG. 5, the terminal provided in this embodiment may further include:
a service querying module 45, configured to send a service query request to the MBIM device through an MBIM control channel; and
a service receiving module 46, configured to receive, through the MBIM control channel, service information that is supported by the MBIM device and returned by the MBIM device, where the service information is used to indicate that the terminal supports a query of the positioning information.

The apparatus provided in this embodiment may be configured to execute a process executed by a terminal in the foregoing method embodiments, specific implementation principles and technical effects thereof are similar to those in the method embodiments, and details are not repeatedly described herein.

FIG. 7 is a schematic structural diagram of an MBIM device according to an embodiment of the present invention. As shown in FIG. 7, the MBIM device provided in this embodiment includes:
a second receiving module 81, configured to receive, through an MBIM data channel, a positioning query request sent by a terminal;
an acquiring module 82, configured to acquire positioning information of the terminal according to the positioning query request; and
a second sending module 83, configured to send the positioning information to the terminal through the MBIM data channel.

The MBIM device provided in this embodiment may be configured to execute the method embodiment shown in FIG. 2. The MBIM device provided in this embodiment may directly communicate with a terminal through an MBIM data channel, and may also directly communicate with a GPS module, so as to implement that the terminal performs positioning by using the MBIM device by acquiring positioning information from the GPS module without installing a drive, which is convenient for the terminal to acquire the positioning information.

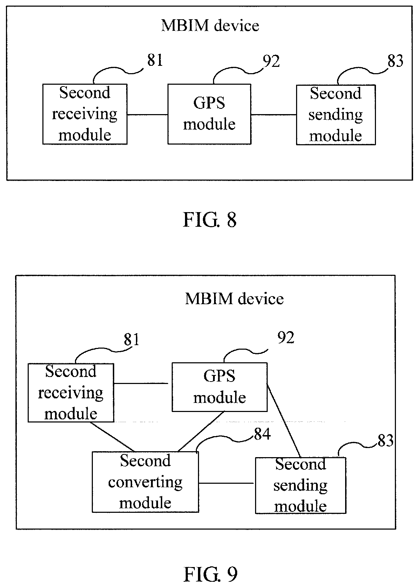

FIG. 8 is a schematic structural diagram of an MBIM device according to another embodiment of the present invention. As shown in FIG. 8, the acquiring module 82 (as shown in FIG. 7) in this embodiment may be a Global Positioning System GPS module 92.

FIG. 9 is a schematic structural diagram of an MBIM device according to still another embodiment of the present invention. As shown in FIG. 9, on a basis of a structure shown in FIG. 8, the MBIM device provided in this embodiment further includes a second converting module 84. Specifically, the positioning query request that is sent by the terminal and received by the second receiving module 81 through the MBIM data channel is in a user-defined data stream DSS format for a data channel. The second converting module 84 is configured to convert the positioning query request in a DSS format into a positioning query request in a format that can identified by the GPS module 92 and then send the converted positioning query request to the GPS module 92, so that the GPS module 92 may perform corresponding processing according to the positioning query request, so as to acquire positioning information.

Further, the second converting module 84 may be further configured to: receive the positioning information acquired by the GPS module 92, convert the positioning information into positioning information in a DSS format, and send the converted positioning information to the second sending module 83, so that the second sending module 83 may send the positioning information to the terminal by using the MBIM data channel.

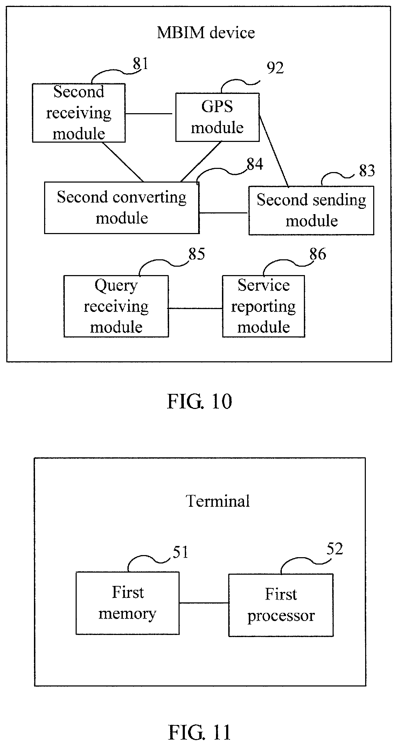

FIG. 10 is a schematic structural diagram of an MBIM device according to still another embodiment of the present invention. As shown in FIG. 10, on a basis of a structure shown in FIG. 9, the MBIM device provided in this embodiment may further include:
a query receiving module 85, configured to receive, through an MBIM control channel, a service query request sent by the terminal; and
a service reporting module 86, configured to return, through the MBIM control channel, service information that is supported by the MBIM device to the terminal, where the service information is used to indicate that the MBIM device supports a query of the positioning information.

The MBIM device provided in this embodiment may be configured to execute technical solutions in the foregoing method embodiments, specific implementation principles and technical effects thereof are similar, and details are not repeatedly described herein.

FIG. 11 is a schematic structural diagram of a terminal according to still another embodiment of the present invention. As shown in FIG. 11, the terminal in this embodiment includes a first memory 51 and a first processor 52, where the first memory 51 is configured to store an instruction; and the first processor 52 is coupled to the first memory 51, the first processor 52 is configured to execute the instruction stored in the first memory 51, and the first processor 52 is configured to execute the technical solution in the method embodiment shown in FIG. 1 or the technical solution executed by the terminal in the method embodiment shown in FIG. 3. Specific implementation principles thereof are similar, and details are not repeatedly described herein.

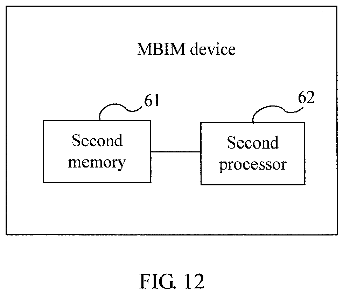

FIG. 12 is a schematic structural diagram of an MBIM device according to still another embodiment of the present invention. As shown in FIG. 12, the MBIM device in this embodiment includes a second memory 61 and a second processor 62, where the second memory 61 is configured to store an instruction; and the second processor 62 is coupled to the second memory 61, the second processor 62 is configured to execute the instruction stored in the second memory 61, and the second processor 62 is configured to execute the technical solution of the method embodiment shown in FIG. 2 or the technical solution executed by the terminal in the method embodiment shown in FIG. 3. Specific implementation principles thereof are similar, and details are not repeatedly described herein.

Persons of ordinary skill in the art may understand that all or a part of the steps of method embodiments may be implemented by a program instructing relevant hardware. The program may be stored in a computer readable storage medium. When the program runs, the steps of the method embodiments are executed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A positioning information acquisition method, comprising:
acquiring (101), by a terminal, a positioning query request;
sending (102), by the terminal, the positioning query request to an MBIM device through a Mobile Broadband Interface Model MBIM data channel, so that the MBIM device acquires positioning information of the terminal according to the positioning query request; and
receiving (103), by the terminal through the MBIM data channel, the positioning information returned by the MBIM device, **characterized by**
before the sending, by the terminal, the positioning query request to an MBIM device through a Mobile Broadband Interface Model MBIM data channel, further comprising:
converting, by the terminal, the positioning query request into a positioning query request in a user-defined data stream DSS format for a data channel;
wherein the positioning information that is returned by the MBIM device and received by the terminal through the MBIM data channel is in a DSS format, and
after the receiving, by the terminal through the MBIM data channel, the positioning information returned by the MBIM device, the method further comprises:
converting, by the terminal, the positioning information in a DSS format into positioning information in a format that can be identified by the terminal.

2. The method according to claim 1, before the acquiring by a terminal, a positioning query request, further comprising:
sending, by the terminal through an MBIM control channel, a service query request to the MBIM device; and
receiving, by the terminal through the MBIM control channel, service information that is supported by the MBIM device and returned by the MBIM device, wherein the service information is used to indicate that the terminal supports a query of the positioning information.

3. A positioning information acquisition method, comprising:
receiving (201), by a Mobile Broadband Interface Model MBIM device through a Mobile Broadband Interface Model MBIM data channel, a positioning query request sent by a terminal;
acquiring (202), by the MBIM device, positioning information of the terminal according to the positioning query request; and
sending (203), by the MBIM device, the positioning information to the terminal through the MBIM data channel, **characterized by**
before the sending, by the MBIM device, the positioning information to the terminal through the MBIM data channel, further comprising:
converting, by the MBIM device, the positioning information into positioning information in a user-defined data stream DSS format for a data channel;
before the receiving, by an MBIM device through an MBIM data channel, a positioning query request sent by a terminal, further comprising:
receiving, by the MBIM device through an MBIM control channel, a service query request sent by the terminal; and
returning, by the MBIM device through the MBIM control channel, service information that is supported by the MBIM device to the terminal, wherein the service information is used to indicate that the terminal supports a query of the positioning information.

4. A terminal, comprising:
an application module (41), configured to acquire a positioning query request;
a first sending module (42), configured to send the positioning query request to an MBIM device through a Mobile Broadband Interface Model MBIM data channel, so that the MBIM device acquires positioning information of the terminal according to the positioning query request; and
a first receiving module (43), configured to receive, through the MBIM data channel, the positioning information returned by the MBIM device; **characterized by**
a first converting module (44), configured to convert the positioning query request into a positioning query request in a user-defined data stream DSS format for a data channel;
wherein the positioning information that is returned by the MBIM device and received by the terminal through the MBIM data channel is in a DSS format, and
the first converting module is further configured to convert the positioning information in a DSS format into positioning information in a format that can be identified by the terminal.

5. The terminal according to claim 4, further comprising:
a service querying module, configured to send a service query request to the MBIM device through an MBIM control channel; and
a service receiving module, configured to receive, through the MBIM control channel, service information that is supported by the MBIM device and returned by the MBIM device, wherein the service information is used to indicate that the terminal supports a query of the positioning information.

6. A Mobile Broadband Interface Model MBIM device, **characterized by** comprising:
a second receiving module (81), configured to receive, through an MBIM data channel, a positioning query request sent by a terminal;
an acquiring module (82), configured to acquire positioning information of the terminal according to the positioning query request; and
a second sending module (83), configured to send the positioning information to the terminal through the MBIM data channel, wherein the acquiring module is a Global Positioning System GPS module;
wherein the positioning query request that is sent by the terminal and received by the second receiving module through the MBIM data channel is in a user-defined data stream DSS format for a data channel, and
the MBIM device further comprises:
a second converting module, configured to convert the positioning query request in a DSS format into a positioning query request in a format that can be identified by the GPS module, and send the converted positioning query request to the GPS module.

7. The MBIM device according to claim 6, wherein the second converting module is further configured to: receive the positioning information acquired by the GPS module, convert the positioning information into positioning information in a DSS format, and send the converted positioning information to the second sending module.

## Patentansprüche

1. Verfahren zum Erfassen von Standortinformationen, umfassend:
Erfassen (101) einer Standortabfrageanforderung in einem Endgerät;
Senden (102) der Standortabfrageanforderung von dem Endgerät durch einen Datenkanal eines mobilen Breitbandschnittstellenmodells (Mobile Broadband Interface Model data channel, MBIM-Datenkanal) an eine MBIM-Vorrichtung, sodass die MBIM-Vorrichtung die Standortinformationen des Endgeräts gemäß der Standortabfrageanforderung erfasst; und
Empfangen (103) der Standortinformationen, die von der MBIM-Vorrichtung durch den MBIM-Datenkanal zurückgesendet werden, in dem Endgerät; **dadurch gekennzeichnet dass** das Verfahren
vor dem Senden der Standortabfrageanforderung von dem Endgerät durch einen Datenkanal eines mobilen Breitbandschnittstellenmodells (MBIM-Datenkanal) an eine MBIM-Vorrichtung außerdem Folgendes umfasst:
Umwandeln der Standortabfrageanforderung durch das Endgerät in eine Standortabfrageanforderung in einem benutzerdefinierten Datenstromformat, DSS-Format, für einen Datenkanal;
wobei die Standortinformationen, die von der MBIM-Vorrichtung zurückgesendet werden und durch den MBIM-Datenkanal in dem Endgerät empfangen werden, in einem DSS-Format vorliegen; und
wobei das Verfahren nach dem Empfangen der Standortinformationen, die von der MBIM-Vorrichtung durch den MBIM-Datenkanal zurückgesendet werden, in dem Endgerät, außerdem Folgendes umfasst:
Umwandeln der Standortinformationen in einem DSS-Format durch das Endgerät in Standortinformationen in einem Format, das durch das Endgerät identifiziert werden kann.

2. Verfahren nach Anspruch 1, das vor dem Erfassen einer Standortabfrageanforderung in einem Endgerät außerdem Folgendes umfasst:
Senden einer Dienstabfrageanforderung von dem Endgerät durch einen MBIM-Steuerkanal an die MBIM-Vorrichtung; und
Empfangen von Dienstinformationen, die von der MBIM-Vorrichtung unterstützt und von der MBIM-Vorrichtung durch den MBIM-Steuerkanal zurückgesendet werden, in dem Endgerät, wobei die Dienstinformationen verwendet werden, um anzuzeigen, dass das Endgerät eine Abfrage der Standortinformationen unterstützt.

3. Verfahren zum Erfassen von Standortinformationen, umfassend:
Empfangen (201) einer Standortabfrageanforderung, die von einem Endgerät gesendet wird, durch einen Datenkanal eines mobilen Breitbandschnittstellenmodells (Mobile Broadband Interface Model data channel, MBIM-Datenkanal) in einer Vorrichtung eines mobilen Breitbandschnittstellenmodells (Mobile Broadband Interface Model device, MBIM-Vorrichtung);
Erfassen (202) der Standortinformationen des Endgeräts in der MBIM-Vorrichtung gemäß der Standortabfrageanforderung; und
Senden (203) der Standortinformationen von der MBIM-Vorrichtung durch den MBIM-Datenkanal an das Endgerät, **dadurch gekennzeichnet, dass** das Verfahren vor dem Senden der Standortinformationen von der MBIM-Vorrichtung durch den MBIM-Datenkanal an das Endgerät außerdem Folgendes umfasst:
Umwandeln der Standortinformationen durch die MBIM-Vorrichtung in Standortinformationen in einem Format eines benutzerdefinierten Datenstroms, DSS-Format, für einen Datenkanal;
wobei das Verfahren vor dem Empfangen einer Standortabfrageanforderung, die von einem Endgerät durch einen MBIM-Datenkanal gesendet wird, in einer MBIM-Vorrichtung, außerdem Folgendes umfasst:
Empfangen einer Dienstabfrageanforderung, die von dem Endgerät durch einen MBIM-Steuerkanal gesendet wird, in der MBIM-Vorrichtung; und
Zurücksenden von Dienstinformationen, die von der MBIM-Vorrichtung unterstützt werden, von der MBIM-Vorrichtung durch den MBIM-Steuerkanal an das Endgerät, wobei die Dienstinformationen verwendet werden, um anzuzeigen, dass das Endgerät eine Abfrage der Standortinformationen unterstützt.

4. Endgerät umfassend:
ein Anwendungsmodul (41), das konfiguriert ist zum Erfassen einer Standortabfrageanforderung;
ein erstes Sendemodul (42), das konfiguriert ist zum Senden der Standortabfrageanforderung durch einen Datenkanal eines mobilen Breitbandschnittstellenmodells (Mobile Broadband Interface Model data channel, MBIM-Datenkanal) an eine MBIM-Vorrichtung, sodass die MBIM-Vorrichtung die Standortinformationen des Endgeräts gemäß der Standortabfrageanforderung erfasst; und
ein erstes Empfangsmodul (43), das konfiguriert ist zum Empfangen der Standortinformationen, die von der MBIM-Vorrichtung durch den MBIM-Datenkanal zurückgesendet werden; **gekennzeichnet durch**
ein erstes Umwandlungsmodul (44), das konfiguriert ist zum Umwandeln der Standortabfrageanforderung in eine Standortabfrageanforderung in einem Format eines benutzerdefinierten Datenstroms, DSS-Format, für einen Datenkanal;
wobei die Standortinformationen, die von der MBIM-Vorrichtung zurückgesendet werden und durch den MBIM-Datenkanal in dem Endgerät empfangen werden, in einem DSS-Format vorliegen; und
wobei das erste Umwandlungsmodul außerdem konfiguriert ist zum Umwandeln der Standortinformationen in einem DSS-Format in Standortinformationen in einem Format, das durch das Endgerät identifiziert werden kann.

5. Endgerät nach Anspruch 4, das außerdem Folgendes umfasst:
ein Dienstabfragemodul, das konfiguriert ist zum Senden einer Dienstabfrageanforderung durch einen MBIM-Steuerkanal an die MBIM-Vorrichtung; und
ein Dienstempfangsmodul, das konfiguriert ist zum Empfangen von Dienstinformationen, die von der MBIM-Vorrichtung unterstützt und von der MBIM-Vorrichtung durch den MBIM-Steuerkanal zurückgesendet werden, wobei die Dienstinformationen verwendet werden, um anzuzeigen, dass das Endgerät eine Abfrage der Standortinformationen unterstützt.

6. Vorrichtung eines mobilen Breitbandschnittstellenmodells (Mobile Broadband Interface Model device, MBIM-Vorrichtung), **dadurch gekennzeichnet, dass** die Vorrichtung Folgendes umfasst:
ein zweites Empfangsmodul (81), das konfiguriert ist zum Empfangen einer Standortabfrageanforderung, die von einem Endgerät durch einen MBIM-Datenkanal gesendet wird;
ein Erfassungsmodul (82), das konfiguriert ist zum Erfassen der Standortinformationen des Endgeräts gemäß der Standortabfrageanforderung; und ein zweites Sendemodul (83), das konfiguriert ist zum Senden der Standortinformationen durch den MBIM-Datenkanal an das Endgerät, wobei das Erfassungsmodul ein globales Positionsbestimmungssystemmodul (Global Positioning System module, GPS-Modul) ist;
wobei die Standortabfrageanforderung, die von dem Endgerät gesendet wird und von dem zweiten Empfangsmodul durch den MBIM-Datenkanal empfangen wird, in einem benutzerdefinierten Datenstromformat, DSS-Format, für einen Datenkanal vorliegt, und
wobei die MBIM-Vorrichtung außerdem Folgendes umfasst:
ein zweites Umwandlungsmodul, das konfiguriert ist zum Umwandeln der Standortabfrageanforderung in einem DSS-Format in eine Standortabfrageanforderung in einem Format, das von dem GPS-Modul identifiziert werden kann, und zum Senden der umgewandelten Standortabfrageanforderung an das GPS-Modul.

7. MBIM-Vorrichtung nach Anspruch 6, wobei das zweite Umwandlungsmodul außerdem konfiguriert ist zum Empfangen der Standortinformationen, die durch das GPS-Modul erfasst werden, zum Umwandeln der Standortinformationen in Standortinformationen in einem DSS-Format und zum Senden der umgewandelten Standortinformationen an das zweite Sendemodul.

## Revendications

1. Procédé d'acquisition d'informations de positionnement, consistant à :
acquérir (101), grâce à un terminal, une requête d'interrogation de positionnement ;
envoyer (102), grâce au terminal, la requête d'interrogation de positionnement à un dispositif MBIM par le biais d'un canal de données de modèle d'interface à large bande mobile MBIM, de sorte que le dispositif MBIM acquiert des informations de positionnement du terminal en fonction de la requête d'interrogation de positionnement ; et
recevoir (103), grâce au terminal par le biais du canal de données MBIM, les informations de positionnement renvoyées par le dispositif MBIM, **caractérisé par** :
avant l'envoi, grâce au terminal, de la requête d'interrogation de positionnement à un dispositif MBIM par le biais d'un canal de données de modèle d'interface à large bande mobile MBIM, consistant en outre à :
convertir, grâce au terminal, la requête d'interrogation de positionnement en une requête d'interrogation de positionnement dans un format de flux de données défini par l'utilisateur DSS pour un canal de données ;
dans lequel les informations de positionnement qui sont renvoyées par le dispositif MBIM et reçues par le terminal par le biais du canal de données MBIM sont dans un format DSS, et
après la réception, grâce au terminal par le biais du canal de données MBIM, des informations de positionnement renvoyées par le dispositif MBIM, le procédé consiste en outre à :
convertir, grâce au terminal, les informations de positionnement dans un format DSS en informations de positionnement dans un format qui peut être identifié par le terminal.

2. Procédé selon la revendication 1, avant l'acquisition par un terminal, d'une requête d'interrogation de positionnement, consistant en outre à :
envoyer, grâce au terminal par le biais d'un canal de commande MBIM, une requête d'interrogation de service au dispositif MBIM ; et
recevoir, grâce au terminal par le biais du canal de commande MBIM, des informations de service qui sont prises en charge par le dispositif MBIM et renvoyées par le dispositif MBIM, les informations de service étant utilisées pour indiquer que le terminal prend en charge une interrogation des informations de positionnement.

3. Procédé d'acquisition d'informations de positionnement, consistant à :
recevoir (201), grâce à un dispositif de modèle d'interface à large bande mobile MBIM par le biais d'un canal de données de modèle d'interface à large bande mobile MBIM, une requête d'interrogation de positionnement envoyée par un terminal ;
acquérir (202), grâce au dispositif MBIM, des informations de positionnement du terminal en fonction de la requête d'interrogation de positionnement ; et
envoyer (203), grâce au dispositif MBIM, les informations de positionnement au terminal par le biais du canal de données MBIM, **caractérisé par** :
avant l'envoi, grâce au dispositif MBIM, des informations de positionnement au terminal par le biais du canal de données MBIM, consistant en outre à :
convertir, grâce au dispositif MBIM, les informations de positionnement en informations de positionnement dans un format de flux de données défini par l'utilisateur DSS pour un canal de données ;
avant la réception, grâce à un dispositif MBIM par le biais d'un canal de données MBIM, d'une requête d'interrogation de positionnement envoyée par un terminal, consistant en outre à :
recevoir, grâce au dispositif MBIM par le biais d'un canal de commande MBIM, une requête d'interrogation de service envoyée par le terminal ; et
renvoyer, grâce au dispositif MBIM par le biais du canal de commande MBIM, des informations de service qui sont prises en charge par le dispositif MBIM au terminal, les informations de service étant utilisées pour indiquer que le terminal prend en charge une interrogation des informations de positionnement.

4. Terminal, comprenant :
un module d'application (41), conçu pour acquérir une requête d'interrogation de positionnement ;
un premier module d'envoi (42), conçu pour envoyer la requête d'interrogation de positionnement à un dispositif MBIM par le biais d'un canal de données de modèle d'interface à large bande mobile MBIM, de sorte que le dispositif MBIM acquiert des informations de positionnement du terminal en fonction de la requête d'interrogation de positionnement ; et
un premier module de réception (43), conçu pour recevoir, par le biais du canal de données MBIM, les informations de positionnement renvoyées par le dispositif MBIM ; **caractérisé par** :
un premier module de conversion (44), conçu pour convertir la requête d'interrogation de positionnement en une requête d'interrogation de positionnement dans un format de flux de données défini par l'utilisateur DSS pour un canal de données ;
dans lequel les informations de positionnement qui sont renvoyées par le dispositif MBIM et reçues par le terminal par le biais du canal de données MBIM sont dans un format DSS, et
le premier module de conversion est conçu en outre pour convertir les informations de positionnement dans un format DSS en informations de positionnement dans un format qui peut être identifié par le terminal.

5. Terminal selon la revendication 4, comprenant en outre :
un module d'interrogation de service, conçu pour envoyer une requête d'interrogation de service au dispositif MBIM par le biais d'un canal de commande MBIM ; et
un module de réception de service, conçu pour recevoir, par le biais du canal de commande MBIM, des informations de service qui sont prises en charge par le dispositif MBIM et renvoyées par le dispositif MBIM, les informations de service étant utilisées pour indiquer que le terminal prend en charge une interrogation des informations de positionnement.

6. Dispositif de modèle d'interface à large bande mobile MBIM, **caractérisé en ce qu'**il comprend :
un second module de réception (81), conçu pour recevoir, par le biais d'un canal de données MBIM, une requête d'interrogation de positionnement envoyée par un terminal ;
un module d'acquisition (82), conçu pour acquérir des informations de positionnement du terminal en fonction de la requête d'interrogation de positionnement ; et
un second module d'envoi (83), conçu pour envoyer les informations de positionnement au terminal par le biais du canal de données MBIM, le module d'acquisition étant un module de système de positionnement global GPS ;
dans lequel la requête d'interrogation de positionnement qui est envoyée par le terminal et reçue par le second module de réception par le biais du canal de données MBIM est dans un format de flux de données défini par l'utilisateur DSS pour un canal de données, et
le dispositif MBIM comprend en outre :
un second module de conversion, conçu pour convertir la requête d'interrogation de positionnement dans un format DSS en une requête d'interrogation de positionnement dans un format qui peut être identifié par le module GPS, et envoyer la requête d'interrogation de positionnement convertie au module GPS.

7. Dispositif MBIM selon la revendication 6, dans lequel le second module de conversion est conçu en outre pour : recevoir les informations de positionnement acquises par le module GPS, convertir les informations de positionnement en informations de positionnement dans un format DSS, et envoyer les informations de positionnement converties au second module d'envoi.
